# EUROPEAN PATENT APPLICATION

(11) **EP 1 416 686 A1**
(43) Date of publication of application: **06.05.2004**
(21) Application number: 03024533.6
(22) Date of filing: 27.10.2003
(51) Int. Cl.: H04L 12/56

(54) **Optimizing usage of a bluetooth access point network**

(30) Priority: 01.11.2002 US 286638
(71) Applicant: Nokia Corporation, 02150 Espoo (FI)
(72) Inventor: Karhu, Mika, 33100 Tampere (FI); Viikari, Jere, 33180 Tampere (FI)
(74) Representative: Becker Kurig Straus

(57) **Abstract**

Systems and methods for optimizing connection establishment in a short range wireless network, such as a Bluetooth network. A central connection manager employs various mechanisms to control the establishment of connections between access points and data terminals to ensure that unnecessary connection attempts are not made. These mechanisms include: determining whether a data terminal within the coverage area of two or more access points is already connected to one of the access points and, if so, preventing another of the access points from attempting a connection; balancing the load within the access point network by shifting connection attempts to access points with fewer connections; and maintaining a centralized data base of unsupported CoDs and undesirable mobile devices, such as those devices that failed to establish connections in the past.

## Description

### FIELD OF THE INVENTION

This invention relates generally to short range wireless communications systems, and more particularly, to optimizing connection establishment in a short range wireless network.

### BACKGROUND OF THE INVENTION

Bluetooth is a short-range radio network, originally intended as a cable replacement. It can be used to create ad hoc networks of up to eight devices operating together. The Bluetooth Special Interest Group, Specification Of The Bluetooth System, Volumes 1 and 2, Core and Profiles: Version 1.1, February 22, 2001, describes the principles of Bluetooth device operation and communication protocols. The devices operate in the 2.4 GHz radio band reserved for general use by Industrial, Scientific, and Medical (ISM) applications. Bluetooth devices are designed to find other Bluetooth devices within their ten-meter radio communications range and to discover what services they offer.

A connection between two Bluetooth devices is initiated by an inquiring device sending out an inquiry message searching for other devices in its vicinity. Any other Bluetooth device that is listening by means of conducting an inquiry scan, will recognize the inquiry message and respond. The inquiry response is a frequency hop synchronization (FHS) packet containing all of the information required by the inquiring device to address the responding device. This information includes the clock value of the sender (i.e., the responding device), the sender's correct device access code, and the class-of-device (CoD) field. The access code includes the lower address part (LAP) and the upper address part (UAP) of the sender's Bluetooth Device Address (BD_ADDR), a unique, 48-bit IEEE address that is electronically engraved into each Bluetooth device.

The class-of-device (CoD) field of the FHS packet indicates which device class the sender belongs to, such as printer access point, network access point, PDA, cellular telephone, and the like. The class-of-device (CoD) field is a 24 bit field divided into three subfields and a two-bit format field. The high order eleven bit subfield is reserved for indicating general service classes such as information, telephony, audio, object transfer, capturing, rendering, networking, and positioning. The middle five bit subfield comprises the major device class, which can indicate up to 32 different device types. The low order six bit subfield consists of the minor device class, which can indicate up to 64 different variations of each device type. The lowest order two bits are the format field for identifying the format type of the CoD field.

The inquiring device will become the master and the responding device will become the slave in the eventual piconet, if a connection is established. To establish a connection, the inquiring device must enter the page state. The inquiring/paging device uses the information provided in the inquiry response packet, to prepare and send a paging message to the responding device. The inquiring/paging device uses the estimated clock CLKE and access code of the responding device (i.e., the eventual slave device) to temporarily synchronize with it. Since the inquiring/paging device intends to be the master, it includes an assignment of an active member address (AM_ADDR) in the paging message. The paging message sent by the inquiring/paging device is also a frequency hop synchronization (FHS) packet containing all of the information required by the responding device to directly reply to the inquiring/paging device. This information includes the clock value of the sender (i.e., the inquiring/paging device) and the inquiring/paging device's correct device access code. The responding device must be in the page scan state to allow the inquiring/paging device to connect with it. Once in the page scan state, the responding device will receive the paging packet that provides the clock timing and access code of the inquiring/paging device. The responding device responds with a page acknowledgment packet. This enables the two devices to form a connection and both devices transition into the connection state. The inquiring/paging device that has initiated the connection assumes the role of a master device and the responding device assumes the role of a slave device in a new ad hoc network piconet, using the CLK clock timing and access code of the master device.

Each piconet has one master device and up to seven active slave devices. All communication is directed between the master device and each respective slave device. The master initiates an exchange of data and the slave responds to the master. When two slave devices are to communicate with each other, they must do so through the master device. The master device maintains the piconet's network clock and controls when each slave device can communicate with the master device. Members of the ad hoc network piconet join and leave as they move into and out of the range of the master device. Within the network, a master device's available bandwidth is divided among its connections resulting in a situation where a communication between one master and one slave has a larger throughput than communications between one master and, e.g., four slaves.

Piconets also support distributed activities, such as multi-user gateways to an infrastructure network or to a content server, wherein one device serves as an access point and is connected to the infrastructure network or the content server. In most instances, a plurality of devices may serve as access points, each assigned to a different coverage area(s) or "cell"(s) within a larger area of an access point network. A single access point may service a plurality of cells by having a plurality of Bluetooth modules installed within the access point, wherein each module is capable of supporting up to seven (7) active connections. Each access point within the network attempts to establish connections with devices that have entered its cell(s) in the hope that the user may be interested in services available from the infrastructure network or content server to which the access point is connected.

Because access point cells may overlap, two or more BT access points or, two or more BT modules within a single access point, may expend time and resources in attempting to connect to the same mobile device and, in so doing, may ignore other mobile devices within the overlapping area. Similarly, if one access point or BT module determines that it is unable to connect to a particular mobile device (e.g., because of a device malfunction) or the CoD of the mobile device corresponds to a service profile that is not supported by the access point network, it is unable to communicate this information to other access points or BT modules which, in turn, may waste valuable time trying to connect to that mobile device rather than to other more promising customers.

In the case of two or more access points or BT modules whose cells overlap, it is also difficult to balance the load among those access points/BT modules, thereby leading to a deterioration of service at any one of the access points/BT modules that happens to be more congested than adjacent ones. The deterioration in service results from having to divide the access point's or BT module's throughput among more connections than necessary. In the case of an access point/BT module that has received an inquiry response from a mobile device, but has reached its maximum number of connections, there is no way for the access point/BT module to expedite a connection with that device by shifting the work to another access point or BT module in an adjacent overlapping cell whose access point has not yet found the device. Unfortunately, this connection delay may result in the loss of a potential customer.

In short, the foregoing illustrates the inefficiencies associated with current systems and methods for establishing connections in a Bluetooth access point network. As can be seen, much is needed in the way of systems and methods for optimizing connection establishment in these networks.

### SUMMARY OF THE INVENTION

The above-identified problems are solved and a technical advance is achieved in the art by providing systems, methods and computer program products for enabling centralized control of connection establishment between access points and data terminals in an access point network.

An exemplary method includes: storing, at a central location, information relating to connection establishment for a plurality of access points; receiving information associated with a data terminal from a first access point; and determining whether to instruct the first access point to establish a connection with the data terminal based on the information relating to connection establishment.

In an embodiment directed to a computer program product comprising a computer useable medium having computer program logic recorded thereon for enabling centralized control of connection establishment between access points and data terminals in a short range wireless access point network, an exemplary computer program logic includes: program code for storing, at a central location, connection information for a plurality of access points; program code for receiving identification information for a data terminal from a first access point; program code for determining whether the data terminal is already connected to a second access point within the short range wireless network whose coverage area overlaps with a coverage area of the first access point; and if the data terminal is already connected to the second access point, program code for preventing the first access point from establishing a connection with the data terminal.

In an embodiment directed to a computer program product comprising a computer useable medium having computer program logic recorded thereon for enabling centralized control of connection establishment between access points and data terminals in a short range wireless access point network, wherein at least one access point includes a plurality of connection modules, each connection module for establishing a connection with a plurality of data terminals, the computer program logic comprising: program code for storing, at a central location, connection information for a plurality of connection modules in an access point; program code for receiving identification information for a data terminal from a first connection module in the access point; program code for determining whether a second connection module, whose coverage area overlaps with a coverage area of the first connection module, has fewer active connections than the first connection module; and if the second connection module has fewer active connections than the first connection module, program code for instructing the second connection module to establish a connection with the data terminal.

In an alternate embodiment directed to an access point for establishing a wireless connection with a data terminal in a short range wireless access point network, an exemplary access point includes: at least one communication module to communicate with data terminals over a short range wireless communication link; a memory device storing a program; and a processor in communication with the memory device, the processor operative with the program to: receive information from a data terminal; transmit the information to a central controller that controls connection establishment for a plurality of access points in the access point network; and establish a connection with the data terminal only if permitted by the central controller to establish the connection.

Other and further aspects of the present invention will become apparent during the course of the following description and by reference to the attached drawings.

### BRIEF DESCRIPTION OF THE DRAWINGS

FIG. 1 is a block diagram illustrating an exemplary network including a central controller, access points and mobile stations for use in accordance with one embodiment of the present invention.
FIG. 2. is a block diagram illustrating an exemplary Bluetooth access point.
FIG. 3 is a block diagram illustrating an exemplary central controller.
FIG. 4 is a block diagram illustrating an exemplary general information data base.
FIG. 5 is a block diagram illustrating an exemplary active inquiries data base.
FIG. 6 is a block diagram illustrating an exemplary active connections data base.
FIG. 7 is a block diagram illustrating an exemplary preferred terminals data base.
FIG. 8 is a block diagram illustrating an exemplary undesirable terminals data base.
FIG. 9 is a diagram illustrating information transfer between a data terminal, a Bluetooth access point and a central controller in accordance with one embodiment of the present invention.

### DETAILED DESCRIPTION

In the following description of the various embodiments, reference is made to the accompanying drawings which form a part hereof, and in which is shown by way of illustration various embodiments in which the invention may be practiced. It is to be understood that other embodiments may be utilized and structural and functional modifications may be made without departing from the scope of the present invention.

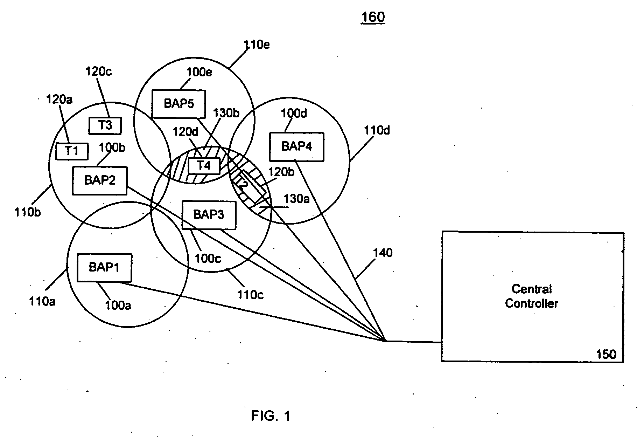

Referring now to the drawings, wherein like reference numerals refer to like parts, FIG. 1 is a block diagram illustrating an exemplary access point network in accordance with one embodiment of the present invention. As shown in FIG. 1, access point network 160 includes a plurality of Bluetooth access points 100a-e, each having a radio frequency (RF) coverage area 110a-e for communicating with data terminals 120a-d. Each data terminal 120a-d is located within a coverage area 110 of at least one access point 100 and, if situated at a point where coverage areas overlap, may be located within the coverage areas of a plurality of access points simultaneously (as in the case of terminals 120b, 120d in regions 130a, 130b, respectively).

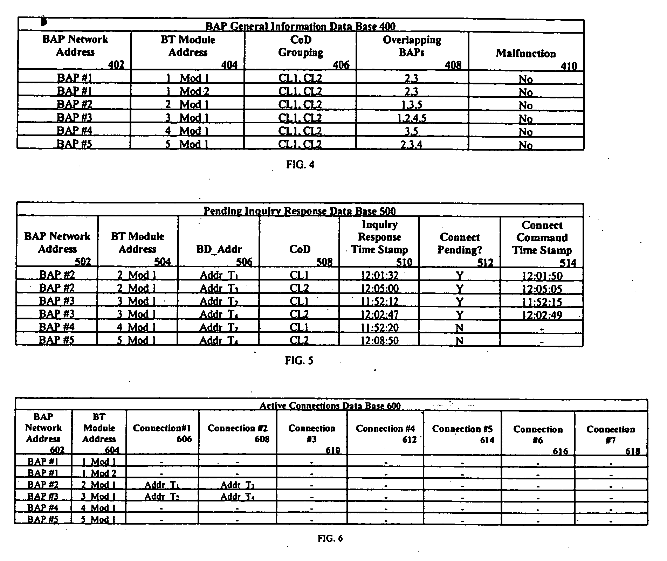

As further shown in FIG. 1, each access point 100 is coupled to a central controller 150 via a local area network (LAN) 140 using a data transmission protocol such as TCP/IP. In alternate embodiments, each access point 100 may be coupled to the central controller 150 directly via a wireless short range communication link, such as, for example, a Bluetooth link, or indirectly via one or more intervening access point(s). The central controller 150 may be located either within one of the access points 100a-e or remotely from all of the access points. In accordance with one embodiment of the present invention, an access point 100 that transmits inquiries and receives an inquiry response from a data terminal 120 within its coverage area 110, will advise the central controller 150 of the inquiry response via LAN 140 and will refrain from establishing a Bluetooth connection with the data terminal 120 unless instructed to do so by central controller 150. In another embodiment of the present invention, an access point 100 that receives an inquiry from a data terminal 120 within its coverage area 110 will transmit an inquiry response to the data terminal 120 and, upon receiving a page from the data terminal 120, will advise central controller 150 of the page via LAN 150. Thereafter, access point 100 will then refrain from establishing a Bluetooth connection with the data terminal 120 unless instructed to do so by central controller 150. As will be discussed in detail hereinafter in connection with FIGS. 3-9, central controller 150 maintains information concerning access points and data terminals for use in optimizing connection establishment between these devices by avoiding unnecessary connections and boosting preferred ones.

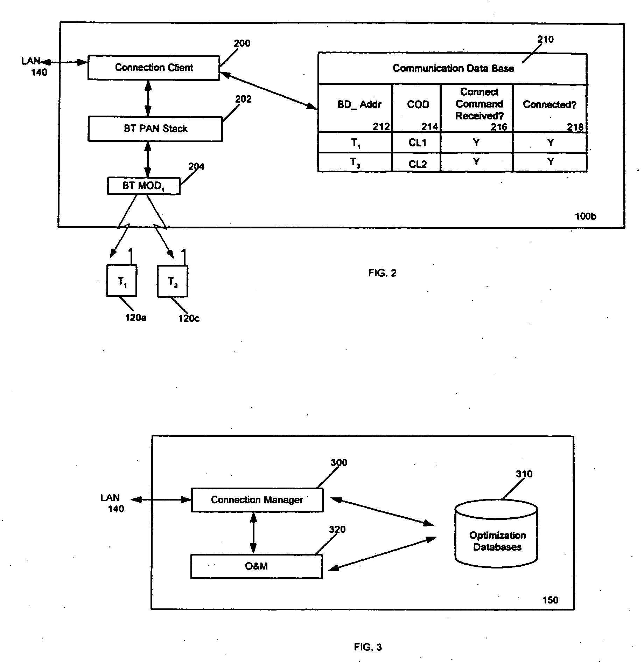

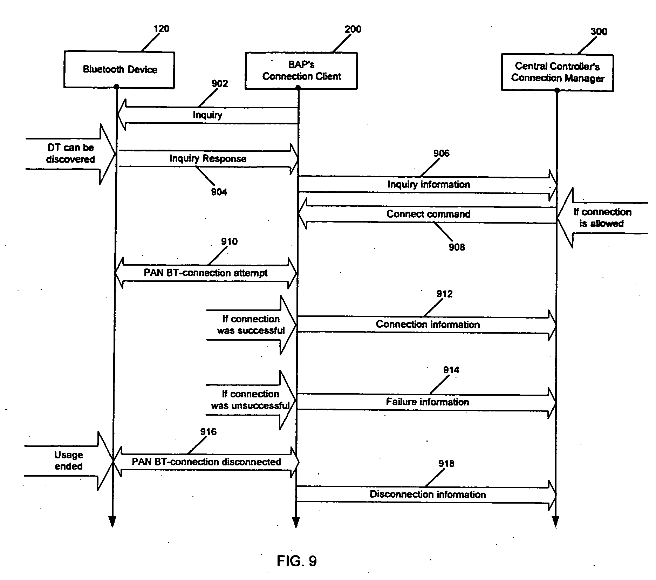

FIG. 2. is a block diagram illustrating an exemplary Bluetooth access point 100. As shown in FIG. 2, access point 100b includes a Bluetooth Stack, such as a Bluetooth Personal Area Network (PAN) stack 202, as illustrated in FIG. 2, and a BT module 204 for establishing connections with data terminals 120a, 120c located within BT module 204's coverage area. In accordance with one embodiment of the present invention, access point 100b also includes a connection client 200 for communicating information concerning connection establishment between central controller 150 and BT PAN stack 202, as will be discussed in detail hereinafter in connection with FIG. 9. For example, connection client 200 may receive an inquiry response from a data terminal within Bluetooth module's 204 coverage area, convey the inquiry response to central controller 150 via LAN 140 and wait for a connect command from controller 150 before establishing a connection. In this regard, connection client 200 maintains a communication data base 210 that includes a record for each data terminal 120 currently located within its coverage area. Each record includes fields for the Bluetooth address (BD_Addr) 212 and Class of Device (CoD) 214 of the data terminal, as well as indicators 216, 218 of whether a connect command has been received from the central controller 150 and whether a connection has been established. As will be discussed in detail hereinafter, central controller 150 also stores information concerning active connections of access points 100/BT modules 204 for use in optimizing usage of network 160 in accordance with one embodiment of the present invention.

In the event that access point 100b includes a plurality of BT modules, communication data base 210 would include an additional field for the BT module that received the inquiry response. Moreover, if access point 100 includes more than one BT module 204, the connect command may instruct the connect client 200 to use the BT PAN stack 202 to establish a connection with a different BT module 204 than the one that received the inquiry response from the data terminal (120a, 120c). In this case, it is also necessary for connection client 200 to store the clock offset of the BT module that found the data terminal so that the other BT module may use it to more efficiently connect to the data terminal (i.e., when transmitting inquiries thereto). In other embodiments, the clock offset may also be used to avoid interference between the BT modules.

FIG. 3 is a block diagram illustrating an exemplary central controller 150. As shown in FIG. 3, central controller 150 includes a connection manager 300, optimization data bases 310 and operations and management (O&M) 320. Connection manager 300 receives information concerning active connections and inquiry responses from access points 100a-e in access point network 160. Based on predetermined connection establishment optimization criteria (which may be defined by operations and management 320) and data stored in optimization data bases 310, connection manager 300 determines which data terminal should be connected to and which access point (or BT module, should the access point have more than one) should establish the connection, as will be discussed in detail hereinafter on connection with FIG. 9.

Optimization data bases 310 include general information concerning the access points 100a-e in access point network 160, information concerning inquiry responses received from access points 100a-e, information concerning active connections at each access point 100a-e and lists of both preferred terminals and undesirable terminals, as will be discussed in detail hereinafter in connection with FIGS. 4-8. Connection manager 300 may use some or all of this information in optimizing connection establishment with data terminals located within the coverage area of access point network 160, as will be discussed in detail hereinafter in connection with FIG. 9. It will be appreciated that optimization data bases 310 may store additional information, such as records of failed connections, connection durations, etc. Moreover, storing optimization information for the entire access point network at a central location facilitates providing this information to third-parties such as O&M, for uses such as tracking data terminals, creating statistics concerning their usage, etc.

FIG. 4 is a block diagram illustrating an exemplary general information data base 400. As shown in FIG. 4, data base 400 includes records containing general information for each access point 100a-e in access point network 160. Each record includes fields for the LAN network address of the access point (BAP Network Address ) 402, the Bluetooth address of the BT module within each access point (BT Module Address) 404, the classes of devices recognized by the BT module (CoD) 406, the other access points whose coverage areas overlap with the coverage area of the BT module (Overlapping BAPs) 408 and an indicator of whether the BT module has malfunctioned (Malfunctioning?) 410.

As shown in field 408 (Overlapping BAPs) of data base 400 and in FIG. 1, the coverage area of an access point may overlap with the coverage areas of one or more neighboring access points. For ease of illustration, it is assumed that the coverage areas of two or more Bluetooth modules within a single access point overlap more or less entirely with one another, otherwise data base 400 would also need to track which BT modules overlap with one another (e.g., two BT modules within an access point may or may not overlap with one another and may or may not overlap with a different BT module in a neighboring access point) for use in deciding how to optimize connection establishment.

Each record in data base 400 may also include a field (not shown) for the clock offset of the BT module within an access point for use in establishing connections. In this manner, central controller 150 can advise a BT module, which knows its own offset, of the offsets of other modules for use in further expediting connection establishment. In addition, data base 600 may also include an additional record (not shown) for error code(s), which can be useful when maintaining the system for tracking and searching for causes of malfunctions/lost connections.

FIG. 5 is a block diagram illustrating an exemplary pending inquiry response data base 500. As shown in FIG. 5, data base 500 includes records of pending inquiry responses received from access points 100a-e in access point network 160. Each record includes fields for the LAN network address of the access point 100a-e that sent an inquiry response to the central controller (BAP Network Address ) 502, the Bluetooth address of the BT module that received the inquiry response from the data terminal (BT Module Address) 504 (the addresses of any other BT modules within the same access point can be determined by referencing field 404 of the records in General Information Data Base 400) together with the Bluetooth address and CoD code of the data terminal that transmitted the inquiry response to the BT module, (BD_ADDR) 506 and (COD) 508, respectively. Each record also includes fields for the time stamp of the inquiry response (Inquiry Response Time Stamp) 510, an indicator of whether a connect command was sent to the access point and the BT module (Connect Pending?) 512 and the time stamp of the connect command (Connect Command Time Stamp) 514.

FIG. 6 is a block diagram illustrating an exemplary active connections data base 600. As shown in FIG. 6, data base 600 includes records containing active connections at each access point 100a-e in access point network 160. Each record includes fields for the LAN network address of the access point (BAP Network Address) 602, the Bluetooth address of the BT module within the access point (BT Module Address) 604 and the Bluetooth addresses of up to seven data terminals with which the BT module is actively connected (Connection #1-7) 606-618. Each record in data base 600 may also include additional fields (not shown) for time stamps indicating the time at which each connection with a data terminal was established.

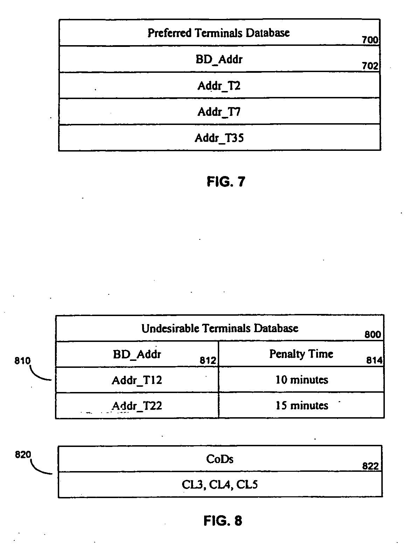

FIG. 7 is a block diagram illustrating an exemplary preferred terminals data base 700. Database 700 includes records containing a field for the Bluetooth address of preferred data terminals (BD_Addr) 702. In one embodiment, a "preferred" data terminal may be one that has been previously identified as being a customer of a service offered within the coverage area of access point network 160.

FIG. 8 is a block diagram illustrating an exemplary undesirable terminals data base 800. As shown in FIG. 8, data base 800 is divided into two sections 810 and 820. Section 810 includes records for data terminals that have been identified as being unlikely customers of services offered within access point network. For example, a data terminal may have been identified as an unlikely customer for having transmitted an inquiry response to an access point without thereafter connecting to the access point. Each record includes fields for the Bluetooth address of the data terminal (BD_ADDR) 812 and a penalty time 814, which represents the amount of time that the data terminal's address will remain in data base 800. Connection manager 300 may assign the penalty time in response to the data terminal's failure to connect to an access point; the amount of time may vary depending upon the reason for the failed connection. Section 820 includes a record containing a field for device classes that are not supported by access points 100a-e within access point network (COD) 822. An example of an unsupported device class may be a Bluetooth accessory, such as an earplug, which cannot be used to communicate with an access point. Database 800 may further include different "levels" of undesirable terminals or classes. Moreover, as will be discussed in detail hereinafter in connection with FIG. 9, connection manager 300 may dynamically move a data terminal from a higher level of undesirability (e.g., "hardly preferred'') to a lower level (e.g., neutral) if it determines that the data terminal is deserving, such as if it determines that the terminal has been actively contacting the Bluetooth network.

FIG. 9 is a diagram illustrating information transfer between a data terminal, a Bluetooth access point and a central controller in accordance with one embodiment of the present invention. As shown in FIG. 9, it is assumed that data terminals 120a-d within access point network 160 are in inquiry scan mode and page scan mode, and thus, are discoverable by access points 100a-e if located within one or more of their coverage areas 110a-e. As will be discussed hereinafter, however, the present invention is not limited to situations where access points 100a-e actively send inquiries. Rather, the present invention also applies to situations where any of the access points 100a-e are in inquiry scan mode and receive inquiries from data terminals 120 located within their coverage area(s).

Each connection client 200 will automatically register with connection manager 300 upon system start-up and provide the network address of its access point, the Bluetooth address of BT modules within the access point, the BT module's CoD grouping, an identification of any overlapping BAPs, and an indication of whether the BT module(s) is/are functioning properly. Rather than occurring automatically upon system start-up, registration information may be manually entered by O & M 320. This information is stored in Bluetooth access point general information data base 400 and will be used in optimizing connections within access point network 160, as will be discussed in detail hereinafter.

As further shown in FIG. 9, in step 902, a BT module 204 within an access point 100 transmits an inquiry that is received by a data terminal 120. In step 904, the data terminal 120 transmits an inquiry response to connection client 200. The inquiry response includes information needed by the BT module 204 to establish a connection with the data terminal 120, such as data terminal 120's Bluetooth address and CoD code. Connection client 120 stores this information locally in communication data base 210 and then, in step 906, transmits it to connection manager 300 via LAN 140 together with the access point's network address and the Bluetooth address of the BT module that received the inquiry response. Connection client 120 may also store and then transmit the BT module's clock offset to the connection manager 300 at this time.

Upon receipt of this information, connection manager 300 creates a record for this inquiry response in pending inquiry response data base 500. The record includes the access point 100's network address, the BT module 204's Bluetooth address and the data terminal120's Bluetooth address and CoD code. Connection manager 300 also adds a time stamp to the record to indicate the time that it received the inquiry response.

Connection manager 300 then determines whether to send a connect command to either connection client 200 in the access point that received the inquiry response or another connection client 200 in a different access point. In this regard, connection manager 300 may first access active connections data base 600 and compare the data terminal's Bluetooth address as contained in the inquiry response with the addresses of data terminals that are actively connected to access point network 160 to determine whether this data terminal is already connected to a different access point and/or BT module. If it is already connected, connection manager 300 may delete the pending inquiry response record from data base 500 and may not send a connect command, thereby saving an unnecessary connection attempt by the access point and BT module that transmitted the inquiry response. In some embodiments of the present invention, the pending inquiry response record will remain in data base 500 for a predetermined period of time, for example three (3) seconds, for enabling a quick connection establishment between the data terminal and the BT module associated with the pending inquiry response record in case the connection between that data terminal and the BT module that established the connection is disconnected for any reason.

If, however, the data terminal 120 is not already connected to a different access point and/or BT module, then connection manager 300 compares the data terminal's CoD code with the CoD grouping of the access point and BT module to determine whether the data terminal's CoD is supported. If the terminal 120's CoD is not supported, then connection manager 300 will delete the inquiry response record from data base 500 and not send a connect command, once again saving an unnecessary connection attempt. Alternatively, access point 100, rather than connection manager 300, may filter inquiry responses based on the CoD code, and thus, only transmit to connection manager 300 those inquiry responses that correspond to data terminals whose CoD codes are supported by the access point.

If, however, terminal 120's CoD is supported by the access point and BT module that transmitted the inquiry response, then connection manager 300 accesses both preferred terminals data base 700 and undesirable terminals data base 800 and compares data terminal 120's Bluetooth address with the addresses of terminals in data bases (700, 800) to determine whether data terminal 120 is one that deserves preferential treatment in connection establishment or one with whom a connection attempt should not be made. Moreover, a comparison between data terminal 120's CoD with the list of CoDs section 820 of undesirable terminals data base 800 provides an alternative mechanism to the one discussed above for avoiding unnecessary connection attempts based on CoD. In an alternate embodiment, the list of unsupported CoDs may be distributed to each access point 100 thereby obviating the need for an access point to inform connection manager 300 of inquiry responses received from such devices. This distributed arrangement prevents unnecessary connection establishment based on a CoD code with the additional benefit, however, of reducing information traffic on LAN 140.

If data terminal 120 is identified as one that is undesirable, then connection manager 300 will delete the inquiry response record from data base 500 and not send a connect command, yet again saving an unnecessary connection attempt. If data terminal 120 is identified as preferred, however, then connection manager 300 may give the terminal processing preference over other pending inquiries in pending inquiry response data base 500. In an alternate embodiment of the present invention, the inquiry response record in data base 500 of the data terminal 120 that is identified as undesirable is not immediately deleted. Instead, a lower priority connection with the data terminal is attempted and if the connection is lost, the system may, for example, thereafter ignore the terminal. If a connection is established with the data terminal, however, and the communication link is clearly active, connection manager 300 may move the data terminal to a lower level of undesirability or remove it from the Undesirable Terminals Database 800 altogether.

Regardless of whether or not data terminal 120 is identified as a preferred terminal, connection manager 300 next accesses the active connections data base 600 to determine whether this access point and/or BT module has already reached its maximum number of connections (i.e., seven per BT module). If the maximum number of active connections has been reached, connection manager 300 will transfer the prospective connection elsewhere within the access point network. The connection attempt may be shifted to either another BT module at the same access point or an adjacent access point with whom the access point's coverage area overlaps. This work shifting preferably takes into account the CoD of both the data terminal and the candidate access point and/or BT module. The BT module and/or access point may be one which has an inquiry response still pending for the same data terminal in the inquiry response data base 500, but which was received later in time than the inquiry response currently being processed by connection manager 300, and thus, has not yet been acted upon (such as, e.g., deleting it upon connection establishment). Alternatively, the candidate BT module or adjacent access point may be one that has not yet found the data terminal 120.

Even if the access point and/or BT module that transmitted the inquiry response has not yet reached its maximum number of connections, connection manager 300 will attempt to balance the load within access point network 160 by transferring the connection attempt to another entity, such as another BT module at the same access point or an adjacent access point with whom the access point's coverage area overlaps, that has fewer active connections. In the same manner as discussed above, the other BT module or access point may be one which has an inquiry response still pending for the same data terminal in the inquiry response data base 500, but which was received later in time than the inquiry response currently being processed by connection manager 300 or, alternatively, may be a BT module or access point that has not yet found data terminal 120.

Based on the foregoing, if a connect command is to be sent, in step 908, connection manager 300 transmits the connect command to either: (a) the access point and BT module that transmitted the inquiry response to it, (b) a different BT module in the same access point, or (c) a BT module in a different but adjacent access point. In doing so, connection manager 300 also modifies the record in pending inquiry response data base 500 to add an indicator that the connect command has been sent and the time of its transmission in fields 512 and 514, respectively.

In step 910, connection client 200 attempts to establish a connection with the data terminal 120 via, for example, the BT Pan stack 202 and BT module. If the attempt is successful, then, in step 912, connection manager 300 receives a connection acknowledgement. In response to this acknowledgment, connection manager 300 adds the Bluetooth address of the data terminal to the relevant record in active connection data base 600 and deletes any pending inquiry responses from that data terminal in active inquiries data base 500.

If the connection attempt was unsuccessful, then, in step 914, connection manager 300 receives a failure acknowledgement. In response to this acknowledgement, connection manager 300 may add the Bluetooth address of this data terminal 120 together with a penalty time to undesirable terminals data base 800.

If neither a connection or failure acknowledgment is received within a predetermined period of time after the connect command was sent, connection manager 300 will indicate a malfunction in the access point/BT module's record in BAP general information data base 400 and may select, in a manner consistent with that discussed above, another BAP and/or BT module (if any) to which to send a connect command.

Ultimately, when, in step 916, the connection with an access point and BT module ends, then in step 918, connection client 200 transmits disconnect information to connection manager 300. The disconnect information preferably includes the addresses of the access point, BT module and data terminal, which connection manager 300 then uses to delete the connection in active connections data base 600.

As mentioned at the outset, the method and system of the present invention is also applicable in situations where a data terminal 120, rather than an access point 100, is the inquiring device. In this embodiment, the access point would receive an inquiry and transmit an inquiry response to the data terminal. The data terminal would then transmit a page that would include its Bluetooth address, CoD code, etc. to the access point. The access point would then transmit this information to connection manager 300 and wait for a connection indication before transmitting a page response to the data terminal, and thus, establishing a connection. Connection manager 300 would then determine whether and with whom a connection should be established in accordance with the method discussed above in connection with FIG. 9. For throughput considerations, in this embodiment, it is preferable that access points that receive inquiries, thereafter order the data terminals to perform a master/slave switch, because an access point is capable of serving up to seven (7) active connections when in master mode, as opposed to only one (1) active connection when in slave mode. However, any BT module of any access point may operate in slave mode, if necessary.

The many features and advantages of the present invention are apparent from the detailed specification, and thus, it is intended by the appended claims to cover all such features and advantages of the invention which fall within the true spirit and scope of the invention.

Furthermore, since numerous modifications and variations will readily occur to those skilled in the art, it is not desired that the present invention be limited to the exact construction and operation illustrated and described herein, and accordingly, all suitable modifications and equivalents which may be resorted to are intended to fall within the scope of the claims. For example, rather than waiting for a connect command from connection manager 300, connection client 200 may instead initiate a connection in the absence of an instruction from connection manager 300 not to do so. In this embodiment, connection client 200 would wait a predetermined period of time after sending the inquiry response information to connection manager 300 before initiating the connection.

## Claims

1. A method for enabling centralized control of connection establishment between access points and data terminals in a short range wireless access point network, comprising:
storing, at a central location, information relating to connection establishment for a plurality of access points;
receiving information associated with a data terminal from a first access point; and
determining whether to instruct the first access point to establish a connection with the data terminal based on the information relating to connection establishment.

2. The method of claim 1 wherein the short range wireless network is a Bluetooth network.

3. The method of claim 1 wherein the method is performed by a host controller.

4. The method of claim 3 wherein the host controller is located within one of the plurality of access points.

5. The method of claim 1 wherein the information relating to connection establishment includes records of active connections at each of the plurality of access points.

6. The method of claim 1 wherein the information associated with the data terminal is an address.

7. The method of claim 1, wherein the step of determining includes determining whether the data terminal is already connected to a second access point whose coverage area overlaps with a coverage area of the first access point; and if the data terminal is already connected to the second access point, preventing the first access point from establishing a connection with the data terminal.

8. The method of claim 1 wherein the information associated with the data terminal is a class of device code and the step of determining includes determining whether the class of device code is supported by the first access point.

9. The method of claim 1 wherein the step of determining includes determining whether the information associated with the data terminal appears in a data base of terminals with which connections are not to be established.

10. The method of claim 9 wherein the data base includes addresses of data terminals that failed to establish a connection with one of the plurality of access points on a prior occasion.

11. The method of claim 9 wherein the data base includes device classes that are not supported by access points within the short range wireless network.

12. The method of claim 1 wherein the step of determining includes determining whether the information associated with the data terminal appears in a data base of preferred data terminals with which connections are to be established.

13. The method of claim 12 wherein preferred data terminals are data terminals that are likely to be interested in a good or service offered via one of the plurality of access points.

14. The method of claim 1 wherein the step of determining includes determining whether the first access point has already reached a maximum number of active connections and, if the maximum number of connections has been reached, transmitting an instruction to a second access point whose coverage area overlaps with a coverage area of the first access point to establish a connection with the data terminal.

15. The method of claim 1 wherein the step of determining includes determining whether a second access point, whose coverage area overlaps with a coverage area of the first access point, has fewer active connections than the first access point; and if the second access point has fewer active connections than the first access point, instructing the second access point to establish a connection with the data terminal and preventing the first access point from establishing a connection with the data terminal.

16. The method of claim 1, wherein the information relating to connection establishment includes clock offset information of a connection module of each of the plurality of access points for enabling rapid connection establishment.

17. The method of claim 1 wherein at least one of the plurality of access points comprises a plurality of connection modules, each module for establishing a short range connection with a plurality of data terminals,
wherein the step of storing includes storing information relating to connection establishment for each of the plurality of connection modules;
wherein the step of receiving includes receiving identification information associated with the data terminal from a first connection module in the at least one of the plurality of access points; and
wherein the step of determining includes whether to instruct the first connection module to establish a connection with the data terminal based on the information relating to connection establishment.

18. The method of claim 17 wherein the step of determining includes determining whether the data terminal is already connected to a second connection module in the access point whose coverage area overlaps with a coverage area of the first connection module; and if the data terminal is already connected to the second connection module, preventing the first connection module from establishing a connection with the data terminal.

19. The method of claim 17 wherein the step of determining includes determining whether a second connection module, whose coverage area overlaps with a coverage area of the first connection module, has fewer active connections than the first connection module; and if the second connection module has fewer active connections than the first connection module, instructing the second connection module to establish a connection with the data terminal while preventing the first connection module from establishing a connection with the data terminal.

20. The method of claim 17 wherein the step of determining includes determining whether the first connection module has already reached a maximum number of connections and if it has, instructing a second connection module in the access point whose coverage area overlaps a coverage area of the first connection module to establish a connection with the data terminal.

21. The method of claim 17 wherein the information relating to connection establishment includes clock offset information of each of the plurality of connection modules within the at least one of the plurality of access points for enabling rapid connection establishment.

22. A computer program product comprising a computer useable medium having computer program logic recorded thereon for enabling centralized control of connection establishment between access points and data terminals in a short range wireless access point network wherein at least one access point includes a plurality of connection modules, each module for establishing a connection with a plurality of data terminals, the computer program logic comprising:
program code for storing, at a central location, connection information for a plurality of connection modules in an access point;
program code for receiving identification information for a data terminal from a first connection module in the access point;
program code for determining whether the data terminal is already connected to a second connection module in the access point whose coverage area overlaps with a coverage area of the first connection module; and
if the data terminal is already connected to the second connection module, program code for preventing the first connection module from establishing a connection with the data terminal.

23. The computer program product of claim 22 wherein the program code for preventing the first connection module from establishing a connection with the data terminal includes program code for not instructing the first connection module to establish the connection.

24. The method of claim 22 wherein the plurality of connection modules are Bluetooth modules.

25. A computer program product comprising a computer useable medium having computer program logic recorded thereon for enabling centralized control of connection establishment between access points and data terminals in a short range wireless access point network, wherein at least one access point includes a plurality of connection modules, each connection module for establishing a connection with a plurality of data terminals, the computer program logic comprising:
program code for storing, at a central location, connection information for a plurality of connection modules in an access point;
program code for receiving identification information for a data terminal from a first connection module in the access point;
program code for determining whether a second connection module, whose coverage area overlaps with a coverage area of the first connection module, has fewer active connections than the first connection module; and
if the second connection module has fewer active connections than the first connection module, program code for instructing the second connection module to establish a connection with the data terminal.

26. The computer program product of claim 25 wherein the program code for instructing the second communication module to establish a connection with the data terminal includes program code for transmitting a connect command to the second connection module.

27. The computer program product of claim 25 further comprising program code for preventing the first connection module from establishing a connection with the data terminal.

28. The computer program product of claim 27 wherein the program code for preventing the first connection module from establishing a connection with the data terminal includes program code for not instructing the first connection module to establish the connection.

29. An access point for establishing a wireless connection with a data terminal in a short range wireless access point network, comprising:
at least one communication module to communicate with data terminals over a short range wireless communication link;
a memory device storing a program; and
a processor in communication with the memory device, the processor operative with the program to:
receive information from a data terminal;
transmit the information to a central controller that controls connection establishment for a plurality of access points in the access point network; and
establish a connection with the data terminal only if permitted by the central controller to establish the connection.

30. The access point of claim 29 wherein the processor is permitted to establish a connection with the data terminal upon receipt of a connect command from the central controller.

31. The access point of claim 29, wherein the processor is further operative with the program to:
transmit the information to the central controller only if a class of device of the data terminal is supported by the access point.

32. The access point of claim 29 wherein the processor is further operative with the program to:
receive the information from the data terminal via a first connection module; and
receive an instruction from the central controller to establish a connection with the data terminal via a second connection module.

33. The access point of claim 29 wherein communications between the access point and central controller is via a local area network.

34. The access point of claim 29 wherein the short range wireless communication link over which the at least one communication module communicates with data terminals is a Bluetooth link.
